# EUROPÄISCHE PATENTANMELDUNG

(11) **EP 3 269 487 A1**
(43) Veröffentlichungstag der Anmeldung: **17.01.2018**
(21) Anmeldenummer: 16179017.5
(22) Anmeldetag: 12.07.2016
(51) Int. Cl.: B23K 9/095

(54) **VERFAHREN ZUR FESTLEGUNG VON SCHWEISSPARAMETERN FÜR EINEN SCHWEISSPROZESS**

(71) Anmelder: Fronius International GmbH, 4643 Pettenbach (AT)
(72) Erfinder: ENNSBRUNNER, Helmut, 4060 Leonding (AT); ANGERMAYR, Daniel, 4050 Traun (AT); SCHÖRGHUBER, Manfred, 4600 Wels (AT); MÖRTENDORFER, Bernhard, 4551 Ried im Traunkreis (AT)
(74) Vertreter: Sonn & Partner Patentanwälte

(57) **Zusammenfassung**

Die Erfindung betrifft ein Verfahren zur Festlegung von Schweißparametern (P) für einen Schweißprozess, bei dem ein Schweißbrenner (2) entlang einer vorgegebenen Schweißbahn (3) über das zumindest eine zu bearbeitende Werkstück (4) geführt wird und in Abhängigkeit der jeweiligen Position auf der Schweißbahn (3) bestimmte Schweißparameter (P) zur Bearbeitung des zumindest einen Werkstücks (4) eingestellt werden. Erfindungsgemäß ist vorgesehen, dass vor der Festlegung der Schweißparameter (P) des Schweißprozesses ideale Schweißparameter (Pi) mit Testschweißprozessen an mehreren Testwerkstücken (8) entlang Testschweißbahnen (9) unter jeweils einer bestimmten Lage und Anordnung der Testwerkstücke (8) in Bezug auf den Erdbeschleunigungsvektor (g) und einen bestimmten Tangentialvektor (t) der Testschweißbahn (9) ermittelt und gespeichert werden, und die Schweißparameter (P) an der jeweiligen Position auf der Schweißbahn (3) für den durchzuführenden Schweißprozess in Abhängigkeit der aktuellen Lage und Anordnung des zumindest einen Werkstücks (4) in Bezug auf den Erdbeschleunigungsvektor (g) und den aktuellen Tangentialvektor (t) der Schweißbahn (3) durch Interpolation der Werte der gespeicherten idealen Schweißparameter (Pi) für die bestimmten Lagen und Anordnungen der Testwerkstücke (8) in Bezug auf den Erdbeschleunigungsvektor (g) und den bestimmten Tangentialvektoren (t) der Testschweißbahnen (9) festgelegt werden.

## Beschreibung

Die Erfindung betrifft ein Verfahren zur Festlegung von Schweißparametern für einen Schweißprozess, bei dem ein Schweißbrenner entlang einer vorgegebenen Schweißbahn über das zumindest eine zu bearbeitende Werkstücke geführt wird und in Abhängigkeit der jeweiligen Position auf der Schweißbahn bestimmte Schweißparameter zur Bearbeitung des zumindest einen Werkstücks eingestellt werden.

Schweißprozesse sind oftmals sehr komplexe Vorgänge, da Schweißprozesse auf Werkstückoberflächen operieren, deren Geometrie sich beinahe bei jeder Schweißaufgabe unterscheidet. Zudem wirken eine Vielzahl von Parametern, wie Schweißstrom, Material des Werkstücks, Fördergeschwindigkeit und Material des Schweißdrahts, um nur einige zu nennen, auf den Schweißprozess ein. Des Weiteren besitzen Schweißprozesse eine stark bewegungsabhängige Komponente, d.h. Anstellwinkel des Schweißbrenners, Schweißgeschwindigkeit, Werkstücklage etc. beeinflussen den Schweißprozess. Dabei ist es eigentlich nebensächlich, ob das Werkstück oder der Schweißbrenner bewegt wird, vielmehr ist die Relativgeschwindigkeit zwischen Werkstück und Schweißbrenner für den Schweißprozess entscheidend. Die Schweißbahn ist dabei jene Bahn, die der Tool Center Point (TCP) des Schweißbrenners entlang der Oberfläche des Werkstücks zurücklegt. Aufgrund der sich ändernden Werkstückgeometrie und -lage entlang einer vorgegebenen Schweißbahn müssen die Schweißparameter unter Umständen an vielen Punkten der Schweißbahn unterschiedlich festgelegt werden. Die Festlegung von Schweißparametern für eine Schweißaufgabe ist dementsprechend aufwendig und kann nur von Spezialisten beherrscht werden.

Die WO 2006/037200 A1 zeigt ein Roboter-System für das Orbitalschweißen von Pipelines, bei dem die Schweißbahn entlang des Außenumfangs der Pipeline verläuft. Bei einer Schweißung über den Außenumfang eines horizontalen Rohres entlang einer Kreisbahn muss der Schweißprozess in unterschiedlichen Schweißpositionen, nämlich der Wannenposition PA, Fallposition PG, Überkopfposition PE und Steigposition PF, sowie deren Übergänge durchgeführt werden. Dazu wird in der WO 2006/037200 A1 vorgeschlagen, an den vorgegebenen Positionen PA, PG, PE und PF die Schweißparameter vorab festzulegen. Zudem ist ein Neigungssensor vorgesehen, um die Lage des Schweißbrenners bzw. die Position des Schweißbrenners entlang der Schweißbahn zu ermitteln. Aufgrund der ermittelten Position werden die Schweißparameter an den Übergängen zwischen den unterschiedlichen Schweißpositionen PA, PG, PE und PF durch Interpolation festgelegt. Als einzustellende Schweißparameter werden Schweißstrom, Schweißspannung, Stick-Out des Schweißdrahts, Anstellwinkel des Schweißbrenners und Schweißgeschwindigkeit angegeben. Auch hier werden, selbst für die geometrisch einfach darzustellende Schweißbahn entlang des Außenumfangs einer Pipeline, für die Ermittlung der Schweißparameter an bestimmten Positionen Spezialisten benötigt. Für Schweißprozesse entlang beliebigen Schweißbahnen bzw. für nicht zylinderförmige Werkstücke bietet dieser Stand der Technik jedoch keine Anleitung.

Die Aufgabe der vorliegenden Erfindung besteht darin, ein oben genanntes Verfahren zur Parametrierung eines Schweißprozesses bzw. die Festlegung von Schweißparametern für einen Schweißprozess zu schaffen, durch welches Schweißprozesse entlang beliebigen Schweißbahnen auch ohne Zutun eines Spezialisten parametriert werden können, um den Schweißprozess mit jeweils optimalen Schweißparametern durchführen zu können.

Gelöst wird die erfindungsgemäße Aufgabe durch ein oben genanntes Verfahren zur Parametrierung eines Schweißprozesses, bei dem vor der Festlegung der Schweißparameter des Schweißprozesses ideale Schweißparameter mit Testschweißprozessen an mehreren Testwerkstücken entlang Testschweißbahnen unter jeweils einer bestimmten Lage und Anordnung der Testwerkstücke in Bezug auf den Erdbeschleunigungsvektor und einen bestimmten Tangentialvektor der Testschweißbahn ermittelt und gespeichert werden, und die Schweißparameter an der jeweiligen Position auf der Schweißbahn für den durchzuführenden Schweißprozess in Abhängigkeit der aktuellen Lage und Anordnung des zumindest einen Werkstücks in Bezug auf den Erdbeschleunigungsvektor und den aktuellen Tangentialvektor der Schweißbahn durch Interpolation der Werte der gespeicherten idealen Schweißparameter für die bestimmten Lagen und Anordnungen der Testwerkstücke in Bezug auf den Erdbeschleunigungsvektor und den bestimmten Tangentialvektoren der Testschweißbahnen festgelegt werden.

Erfindungsgemäß werden vor der Festlegung der Schweißparameter des Schweißprozesses ideale Schweißparameter mit Hilfe von Testschweißprozessen an mehreren Testwerkstücken entlang Testschweißbahnen unter jeweils einer bestimmten Lage und Anordnung der Testwerkstücke in Bezug auf den Erdbeschleunigungsvektor und einem bestimmten Tangentialvektor der Testschweißbahn ermittelt und gespeichert. Dadurch kann die Verknüpfung von tatsächlicher Werkstückgeometrie und Festlegung der idealen Schweißparameter aufgebrochen werden. In diesem Zusammenhang bezeichnen ideale Schweißparameter für bestimmte Aufgaben optimierte Schweißparameter. Abhängig von der Schweißaufgabe können beispielsweise Schweißgeschwindigkeit, Einbrandtiefe oder auch eine optisch ansprechende Naht von besonderer Bedeutung sein und die Schweißparameter entsprechende angepasst und optimiert werden. Da die Relativbewegung des Schweißbrenners zum Werkstück im Bereich der Schweißbahn und deren jeweilige Ausrichtung gegenüber der Erdbeschleunigung im Allgemeinen großen Einfluss auf den Schweißprozess haben, werden diese in Form des Tangentialvektors der Schweißbahn und der Lage und Anordnung der Testwerkstücke in Bezug auf den Erdbeschleunigungsvektor zusammen mit den idealen Schweißparametern gespeichert. Dies ist erforderlich, da Schweißprozesse und Schweißparameter besonders stark von der Bewegung und Lage beeinflusst werden, weil auf den beim Schweißprozess auftretenden verflüssigten metallischen Werkstoff verschiedene Kräfte wirken. Diese Kräfte werden durch den Lichtbogen, Oberflächenspannungen, feste Werkstückkomponenten und die Gravitation beeinflusst. Lage und Anordnung der Werkstücke in Bezug auf den Erdbeschleunigungsvektor haben daher gemeinsam mit dem Tangentialvektor der Schweißbahn entscheidenden Einfluss auf den Schweißprozess bzw. die Schweißparameter. Der Erdbeschleunigungsvektor kann dabei im Koordinatensystem eines Prozessroboters oder aber auch implizit über bekannte Montagelage des Prozessroboters definiert sein. Auch eine Erfassung des Erdbeschleunigungsvektors über Sensoren, vorzugsweise an nicht beschleunigten Prozesskomponenten, ist denkbar. Die Definition des Erdbeschleunigungsvektors im Koordinatensystem, in dem Anordnung und Lage der Werkstücke angegeben werden, kann aber auch beispielsweise durch Transformation aus einem anderen Koordinatensystem, in dem der Erdbeschleunigungsvektor bekannt ist, erfolgen. An allen Punkten mit gleicher Lage und Anordnung der Werkstücke in Bezug auf den Erdbeschleunigungsvektor und gleichem Tangentialvektor der Schweißbahn kann der Schweißprozess zur Erzielung annähernd gleicher Ergebnisse mit denselben Schweißparametern durchgeführt werden. An Testwerkstücken können Spezialisten diese idealen Schweißparameter, welche in der bestimmten Lage und Anordnung die Anforderungen der Schweißaufgabe erfüllen, relativ einfach und ohne Zeitdruck ermitteln. Dabei bestehen die Testwerkstücke vorzugsweise aus dem gleichen Material, besitzen eine ähnliche Oberfläche und haben eine ähnliche Verbindungsform wie bei der durchzuführenden Schweißaufgabe. Die Ermittlung der Schweißparameter wird für verschiedene Lagen und Anordnungen der Testwerkstücke in Bezug auf den Erdbeschleunigungsvektor und auch für unterschiedliche Tangentialvektoren der Testschweißbahn durchgeführt. Anschließend werden die Schweißparameter an der jeweiligen Position auf der Schweißbahn für den durchzuführenden Schweißprozess in Abhängigkeit der aktuellen Lage und Anordnung des zumindest einen Werkstücks in Bezug auf den Erdbeschleunigungsvektor und den aktuellen Tangentialvektor der Schweißbahn durch Interpolation der Werte der gespeicherten idealen Schweißparameter für die bestimmten Lagen und Anordnungen der Testwerkstücke in Bezug auf den Erdbeschleunigungsvektor und den bestimmten Tangentialvektoren der Testschweißbahnen festgelegt. An jenen Stellen entlang der Schweißbahn des zumindest einen Werkstücks, an der die Position und Lage des Werkstücks genau der Position und Lage des Testwerkstücks entspricht, stimmt der Schweißparameter genau mit dem idealen Schweißparameter, welcher an dem Testwerkstück ermittelt wurde, überein. Für die weiteren Punkte entlang der Schweißbahn, für die es keine entsprechenden Punkte auf der Testschweißbahn der Testschweißpunkte gibt, erfolgt eine Interpolation der nächstliegenden idealen Schweißparameter. Die Interpolation kann im einfachsten Fall durch eine lineare Interpolation realisiert werden. Es ist auch denkbar, mehrere ideale Schweißparameter mit höhergradigen Polynomen oder auch logarithmisch zu interpolieren. Mit dem erfindungsgemäßen Verfahren können ideale Schweißparameter in einer derartigen Form erfasst werden, dass in weiterer Folge daraus automatisch und ohne Zutun von Spezialisten die Schweißparameter eines realen Schweißprozesses an konkreten Werkstücken festgelegt werden. Die Festlegung der Schweißparameter kann vor der Durchführung des Schweißprozesses erfolgen und beispielsweise für eine Simulation des Schweißprozesses genutzt werden. Ebenso ist die Festlegung der Schweißparameter in Echtzeit während der eigentlichen Ausführung des Schweißprozesses denkbar. Sollte dafür die Rechenleistung nicht ausreichen, können Schweißparameter mit dem vorgestellten Verfahren auch vorab einzelnen Teilen der Schweißbahn zugeordnet werden, wobei wiederum auf das Zutun eines Spezialisten verzichtet werden kann. Dabei ist das Verfahren für jegliche Schweißprozesse bzw. Lichtbogenprozesse, bei welchen ein verflüssigter Werkstoff auftritt, wie beispielsweise MIG/MAG-Schweißen, WIG-Schweißen, Laserschweißen und weitere, anwendbar. Weiters kann das Verfahrens sowohl für Schweißprozesse zum Fügen von Werkstücken, dem Auftragschweißen zum Auftragen von Zusatzmaterial auf ein Werkstück, sowie zu generativen Fertigungsverfahren eingesetzt werden.

Die Anwendung des Verfahrens kann vereinfacht werden, wenn zumindest für einzelne Punkte entlang der Schweißbahn des zumindest einen zu bearbeitenden Werkstücks und entlang der Testschweißbahn der Testwerkstücke ein Bauteilvektor relativ zum Erdbeschleunigungsvektor aus der Lage und der Anordnung der Werkstücke bzw. Testwerkstücke in Bezug auf den Erdbeschleunigungsvektor definiert wird. Damit kann Lage und Anordnung des Werkstücks bzw. der Werkstücke in der Umgebung der Schweißbahn durch nur einen Vektor, den Bauteilvektor erfasst und dargestellt werden und wichtige Informationen zur Festlegung der Parameter des Schweißprozesses gespeichert werden. Anstelle der komplexen Lage und Anordnung der Werkstücke kann der Bauteilvektor relativ zum Erdbeschleunigungsvektor mit den idealen Schweißparametern abgespeichert werden. Der Bauteilvektor kann beispielsweise in einer Ebene senkrecht zum Tangentialvektor der Schweißbahn definiert werden und durch seine Richtung die zu erstellende Schweißnaht in der Ebene senkrecht zum Tangentialvektor beschreiben. Über den Betrag des Bauteilvektors können zusätzliche Informationen zu Verfügung gestellt werden, wie beispielsweise die Lage des Oberblechs bei einer Überlappnaht, die Form der Naht (z.B. Kehlnaht, Stoßnaht, dgl.). Wird nun in einem Punkt der Schweißbahn der Bauteilvektor durch die Lage und Anordnung der Werkstücke sowie den Tangentialvektor der Schweißbahn bestimmt, können diese mit dem Bauteilvektor und dem Tangentialvektor idealer Schweißparameter verglichen werden. Eine anschließende Interpolation der nächstliegenden idealen Schweißparameter, kann die Festlegung der Schweißparameter für den aktuellen Bauteil- und Tangentialvektor erlauben. Die Definition von Lage und Anordnung der Werkstücke bzw. Testwerkstücke durch einen Bauteilvektor, kann so die Auswertung von Lage und Anordnung der Werkstücke auf einen Vektorvergleich mit anschließender Interpolation reduzieren, wodurch das Verfahren mittels elektronischer Datenverarbeitung einfach implementierbar wird. Dabei können für die Interpolation auch abgeleitete Größen wie beispielsweise die Winkel zwischen Tangentialvektor, Bauteilvektor und Erdbeschleunigungsvektor herangezogen werden.

Als Schweißparameter können der Schweißstrom, die Fördergeschwindigkeit eines Schweißdrahts, die Anstellwinkel des Schweißbrenners zu den Werkstücken und die Schweißgeschwindigkeit ausgewählt und festgelegt werden. Aber auch viele andere Schweißparameter, die den Schweißprozess beeinflussen, können im Zuge des Verfahrens festgelegt werden, beispielsweise Pendelparameter zur Ausbildung breiter Schweißnähte, der zeitliche Ablauf der Vor- und Rückbewegung des Schweißdrahts beim CMT (Cold Metal Transfer)-Schweißprozess oder das Mischungsverhältnis des Gases beim Schutzgasschweißen, um einige zu nennen.

Vorzugsweise werden die idealen Schweißparameter mit Testschweißprozessen entlang Testschweißbahnen mit konstantem Tangentialvektor und konstantem Bauteilvektor ermittelt und gespeichert, d.h. Tangentialvektor und Bauteilvektor haben eine gleichbleibende Lage gegenüber dem Erdbeschleunigungsvektor. So können entlang einer Testschweißbahn verschiedene Schweißparameter variiert werden und nach Begutachtung des Schweißergebnisses die Schweißparameter in dem Bereich, der die Schweißaufgabe bestmöglich erfüllt, als ideale Schweißparameter ermittelt und einschließlich Bauteilvektor und Tangentialvektor gespeichert werden. Zur Begutachtung des Schweißergebnisses und damit Wahl der idealen Schweißparameter können auch Verfahren, wie zum Beispiel Erstellung von Schliffbildern, gewählt werden, die am endgültigen Werkstück nicht oder nicht einfach durchführbar wären. Somit können Kosten reduziert werden, weil die Versuche nur an Testwerkstücken und nicht an realen Werkstücken durchgeführt werden.

Vorteilhafterweise werden die idealen Schweißparameter mit Testschweißprozessen an Testwerkstücken mit konstanter Krümmung entlang der Testschweißbahnen ermittelt und gespeichert. Besonders einfache Testschweißbahnen können sich bei ebenen Testwerkstücken ergeben, da eine gerade Schweißbahn auf einem ebenen Testwerkstück eine konstante Krümmung = 0 aufweist. Zudem können Testwerkstücke mit konstanter Krümmung, wie beispielsweise Rohre oder auch ebene Testwerkstücke, oft durch einfache und kostengünstige Verfügbarkeit überzeugen.

Bevorzugterweise werden die idealen Schweißparameter mit Testschweißprozessen entlang Testschweißbahnen zwischen 10 cm und 150 cm Länge ermittelt und gespeichert. Bei Testschweißbahnen dieser Länge kann sich der Testschweißprozess einstellen und es können Einflüsse des Start- bzw. des Endbereichs bei der Beurteilung der für die Testwerkstücke eingestellten Parameter ausgeschlossen oder zumindest weitestgehend reduziert werden.

Werden die idealen Schweißparameter mit Testschweißprozessen mit verschiedenen Schweißdrähten mit verschiedenen Durchmessern und verschiedenen Materialien ermittelt und gespeichert, und wird zur Festlegung der Schweißparameter des Schweißprozesses der Durchmesser und das Material des verwendeten Schweißdrahtes eingegeben, und werden die Schweißparameter für den durchzuführenden Schweißprozess in Abhängigkeit der eingegebenen Durchmesser und Materialien des Schweißdrahtes festgelegt, können die Schweißparameter abgestimmt auf den aktuell verwendeten Schweißdraht festgelegt werden. Dies kann eine verbesserte Abstimmung von Schweißdraht zu Werkstück bzw. Schweißaufgabe erlauben und sorgt insgesamt für eine vorteilhafte Festlegung der Schweißparameter des durchzuführenden Schweißprozesses und in der Folge einer höheren Schweißqualität.

Weiter verbessert werden kann das Verfahren, wenn ideale Schweißparameter für den Beginn als Schweißstartparameter und bzw. oder für das Ende des Testschweißprozesses als Schweißendeparameter an Testwerkstücken ermittelt und gespeichert werden und wenn die Schweißparameter für den durchzuführenden Schweißprozess mit Schweißstartparametern beginnen und bzw. oder mit Schweißendeparametern enden, welche entsprechend der jeweiligen Position, der aktuellen Lage und Anordnung des zumindest einen Werkstücks in Bezug auf den Erdbeschleunigungsvektor und den aktuellen Tangentialvektor durch Interpolation der Werte der gespeicherten Schweißstartparameter bzw. Schweißendeparameter für die bestimmten Lagen und Anordnungen in Bezug auf den Erdbeschleunigungsvektor und den bestimmten Tangentialvektoren der Testwerkstücke festgelegt werden. Schweißstartparameter und Schweißendeparameter unterscheiden sich von den idealen Schweißparameter entlang der Schweißbahn insofern, als der Schweißprozess mit diesen Parametern beginnt oder endet. Schweißstartparameter bzw. Schweißendeparameter definieren die Durchführung des Start- und Endvorgangs und definieren somit einen Ablauf, der auch Zeitwerte beinhalten und Bewegungsabläufe an einer Position erfordern kann. Im Gegensatz dazu definieren Schweißparameter entlang der Schweißbahn keine Sequenzen und an einer Position haben die idealen Schweißparameter immer nur einen Wert. Da zu Beginn des Schweißprozesses noch kein verflüssigter Werkstoff bzw. Schweißdraht zur Ausbildung der Schweißnaht vorhanden ist, sind die Schweißstartparameter entsprechend abweichend zu wählen und festzulegen. Gleiches gilt in analoger Weise für das Ende des Schweißprozesses, bei dem ein entsprechender Abschluss der Schweißnaht gefordert ist. Durch die Verwendung von Schweißstartparameter zu Beginn und bzw. oder von Schweißendeparameter am Ende des Schweißprozesses können über die gesamte Schweißbahn einschließlich Beginn und Ende durchgehend vorteilhafte Schweißparameter für den durchzuführenden Schweißprozess eingestellt werden. Dies kann insbesondere bei der Ausbildung von sogenannten Steppnähten, bei denen die Schweißnaht regelmäßig durch nahtlose Bereiche unterbrochen ist, die Qualität und Geschwindigkeit des Fügeprozesses verbessern.

Werden die Schweißparameter zu Beginn des Schweißprozesses zwischen den Schweißstartparameter und den idealen Schweißparametern bzw. am Ende des Schweißprozesses zwischen den idealen Schweißparametern und den Schweißendeparameter gewichtet mit der Distanz auf der Schweißbahn oder der Zeit interpoliert, kann ein kontinuierlicher Übergang zwischen Schweißstartparameter bzw. Schweißendeparameter und den idealen Schweißparametern entlang der Schweißbahn erreicht werden. Eine vorteilhaft ausgebildete Schweißnaht kann so über die gesamte Länge der Schweißnaht erreicht werden.

Vorteilhaft werden die idealen Schweißparameter mit Testschweißprozessen unter mehreren bestimmten Öffnungswinkeln zwischen den Testwerkstücken ermittelt und gespeichert und die Schweißparameter für den durchzuführenden Schweißprozess in Abhängigkeit des aktuellen Öffnungswinkels zwischen den Werkstücken durch Interpolation der Werte der idealen Schweißparameter bei den bestimmten Öffnungswinkeln zwischen den Testwerkstücken festgelegt. Da der Öffnungswinkel zwischen den Werkstücken den Schweißprozess beeinflusst, kann so ein verbessertes Ergebnis der aktuellen Schweißaufgabe erzielt werden.
Weiter verbessert werden kann das Verfahren, wenn die idealen Schweißparameter mit Testschweißprozessen unter mehreren bestimmten Temperaturen der Testwerkstücke eingestellt und gespeichert werden, und die Schweißparameter für den durchzuführenden Schweißprozess in Abhängigkeit der ermittelten aktuellen Temperatur des zumindest einen Werkstücks durch Interpolation der Werte der idealen Schweißparameter bei den bestimmten Temperaturen der Testwerkstücke festgelegt werden. Da die Temperatur des Schweißprozesses bzw. in dessen unmittelbarer Umgebung zusätzlich Einfluss auf das Fließverhalten des verflüssigten Werkstoffs und dessen Oberflächenspannungen hat, kann durch Anpassungen der Schweißparameter an die Temperatur der Schweißprozess verbessert durchgeführt werden. Die Werkstücktemperatur vor dem Schweißprozess hat beispielsweise einen massiven Einfluss auf die sogenannte T8/5 Zeit (gibt die Zeit zum Abkühlen des Werkstücks von 800 °C auf 500 °C an und stellt bei Stahl eine wichtige Kennzahl für die Ausbildung der Korngröße bzw. der Versprödung dar) und somit sind auch dahingehend angepasste Schweißparameter wichtig. Das Ermitteln und Speichern von idealen Schweißparametern bei mehreren bestimmten Temperaturen der Testwerkstücke kann eine vorteilhafte Anpassung der Schweißparameter an die aktuelle Temperatur der Werkstücke erlauben.

Werden die idealen Schweißparameter mit Testschweißprozessen unter mehreren bestimmten Kühlungssituationen der Testwerkstücke ermittelt und gespeichert, wird zur Festlegung der Schweißparameter des Schweißprozesses die Kühlungssituation des zumindest einen Werkstücks eingegeben, und werden die Schweißparameter für den durchzuführenden Schweißprozess in Abhängigkeit der eingegebenen Kühlungssituation des zumindest einen Werkstücks festgelegt, können die Schweißparameter auf die durch die Kühlungssituation der Werkstücke resultierende Temperatur angepasst werden. Dies ermöglicht eine vorteilhafte Festlegung der Schweißparameter unter Berücksichtigung der Kühlungssituation, welche beispielsweise über Wärmeleitkoeffizienten und Querschnittsflächen des umgebenden Materials angegeben werden kann.

Das Verfahrens kann verbessert werden, wenn die idealen Schweißparameter mit Testschweißprozessen aus verschiedenen Materialien ermittelt und gespeichert werden, zur Festlegung der Schweißparameter des Schweißprozesses das Material des zumindest einen Werkstücks eingegeben wird, und die Schweißparameter für den durchzuführenden Schweißprozess in Abhängigkeit des eingegebenen Materials des zumindest einen Werkstücks festgelegt werden.

Werden die idealen Schweißparameter mit Testschweißprozessen unter mehreren bestimmten geometrischen Bedingungen für die Testwerkstücke ermittelt und gespeichert, und werden die Schweißparameter für den durchzuführenden Schweißprozess in Abhängigkeit der ermittelten aktuellen geometrischen Bedingungen für die Werkstücke durch Interpolation der Werte der idealen Schweißparameter bei den bestimmten geometrischen Bedingungen für die Testwerkstücke festgelegt, kann auf geänderte geometrischen Bedingungen reagiert werden und es können die Schweißparameter an die geänderten geometrischen Bedingungen angepasst werden. Die zu berücksichtigenden geometrischen Bedingungen können Spaltbreite, Werkstückversatz, Winkel zwischen den Werkstücken, Schwankung der sogenannten Anarbeitung und dergleichen sein. So kann beispielsweise bei Erfassung der Spaltbreite während der Durchführung des Schweißprozesses auf eine sich im Verlauf der Schweißbahn ändernde Spaltbreite reagiert werden, indem die Schweißparameter aus idealen Schweißparametern für die bestimmten Lagen und Anordnungen in Bezug auf den Erdbeschleunigungsvektor, den bestimmten Tangentialvektoren sowie die bestimmte geometrische Bedingung, in diesem Fall die Spaltbreite, festgelegt werden. Dabei kann auch für die geometrische Bedingung eine Interpolation durchgeführt werden. Sind beispielsweise ideale Schweißparameter für eine Spaltbreite von 2 mm und 4 mm gespeichert, kann bei einer gemessenen Spaltbreite von 3,5 mm als geometrische Bedingung entsprechend zwischen den idealen Schweißparametern für 2 mm und 4 mm interpoliert werden. Besonders auszeichnen kann sich dieses Verfahren wenn die geometrischen Bedingungen am Werkstück in Echtzeit erfasst werden und der Schweißparameter an die sich ändernden geometrischen Bedingungen während des Schweißprozesses entsprechend dem Verfahren angepasst werden. Damit kann auf abweichende geometrische Bedingungen aufgrund von Werkstücktoleranzen bzw. Toleranzen in der Anordnung der Werkstücke während des Schweißprozesses ideal reagiert werden. Auch hier bedeutet eine ideale Reaktion eine auf die Schweißaufgabe optimierte Reaktion und wird vom Spezialisten bei den Testschweißprozessen zur Ermittlung der idealen Schweißparameter festgelegt. Die Schweißparameter können so entsprechend der erfassten, aktuellen geometrischen Bedingungen bzw. entsprechend den aktuellen Abweichungen auf Grund von Toleranzen festgelegt werden. Auf diese Weise kann ein Schweißprozess mit idealen, den geometrisch Bedingungen entsprechenden Schweißparametern erreicht werden.

Weitere Vorteile ergeben sich, wenn die Schweißparameter für den durchzuführenden Schweißprozess an dem zumindest einen Werkstück unter Berücksichtigung des jeweiligen Krümmungsradius an der jeweiligen Position entlang der Schweißbahn festgelegt werden. Neben dem Tangentialvektor der Schweißbahn kann auch der Krümmungsradius der Schweißbahn Einfluss auf die Schweißparameter haben. Beispielsweise findet bei kleinen Krümmungsradien der Schweißprozess in einem lokal begrenzten Bereich statt, wodurch mit einer erhöhten Erwärmung des Werkstücks zu rechnen ist. Bei kleinen Krümmungsradien können sich die auf den verflüssigten Werkstoff ausgeübten Kräfte sowie der Wärmeabfluss deutlich von Kräften und Wärmeabfluss bei hohen Krümmungsradien unterscheiden. Eine Berücksichtigung des Krümmungsradius bei der Speicherung der idealen Schweißparameter sowie der Festlegung der Schweißparameter kann somit zu einem verbesserten Schweißprozess führen.

Werden die Schweißparameter für den durchzuführenden Schweißprozess an dem zumindest einen Werkstück unter Berücksichtigung der Geometrie des Werkstücks in der Umgebung der jeweiligen Position entlang der Schweißbahn festgelegt, kann dies ebenfalls den Schweißprozess verbessern. Auch die Geometrie der Werkstücke in der Umgebung der jeweiligen Position beeinflusst den Schweißprozess. Einerseits durch das Werkstückvolumen im Bereich der aktuellen Position, welches den Wärmetransport von der Schweißstelle beeinflusst. Andererseits hat auch die Oberflächengeometrie direkten Einfluss auf den verflüssigten Werkstoff. Die Berücksichtigung der Geometrie des Werkstücks in der Umgebung der jeweiligen Position kann somit ebenfalls den durchzuführenden Schweißprozess verbessern. Eine einfache Berücksichtigung der Geometrie der Werkstücke kann über die Dicke der Werkstücke an der Schweißnaht oder auch über das an die Naht angrenzende Volumen der Werkstücke durchgeführt werden.

Die Schweißparameter für den durchzuführenden Schweißprozess können in regelmäßigen Zeitintervallen oder regelmäßigen Distanzen auf der Schweißbahn festgelegt werden.

Eine beispielsweise Ausführung des Verfahrens wird anhand der beigefügten, beispielhaften Zeichnungen näher erläutert. Darin zeigen:
- Fig. 1: eine schematische Übersichtsdarstellung eines Schweißprozesses;
- Fig. 2a-2f: Testwerkstücke für eine Überlappnaht mit horizontalen Schweißnähten in verschiedenen Lagen;
- Fig. 3a-3b: Testwerkstücke für eine Kehlnaht;
- Fig. 4: ein Werkstück mit der Bauteilvektorebene zur Definition des Bauteilvektors
- Fig. 5: den Bauteilvektor in der Bauteilvektorebene entsprechend Fig. 4;
- Fig. 6a-6c: Bauteilvektoren für unterschiedliche Testwerkstückanordnungen;
- Fig. 7: den Bauteilvektor eines unebenen Werkstücks;
- Fig. 8: ein Beispiel für Auftragschweißen an einem Werkstück;
- Fig. 9: den Bauteilvektor beim beispielhaften Auftragschweißen;
- Fig. 10a: Vorderansicht von Testwerkstücken mit einer Schweißbahn konstanter Krümmung; und
- Fig. 10b: Draufsicht auf die Testwerkstücke gemäß Fig. 10a.

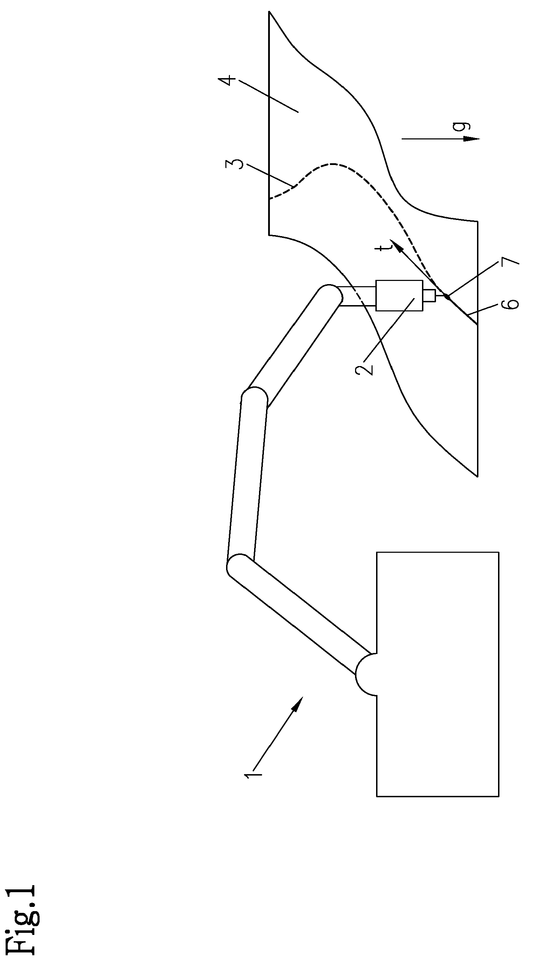

Fig. 1 zeigt eine schematische Übersichtsdarstellung eines Schweißprozesses, wobei ein Prozessroboter 1 einen Schweißbrenner 2 entlang einer vorgegebenen Schweißbahn 3 über zumindest ein zu bearbeitendes Werkstück 4 führt. Bei dem gezeigten Ausführungsbeispiel wird der Schweißbrenner 2 entlang der Oberfläche des Werkstücks 4 geführt. Alternativ dazu kann auch das Werkstück 4 bei feststehendem Schweißbrenner 2 bewegt werden oder eine simultane Bewegung von Schweißbrenner 2 und Werkstück 4 erfolgen. Entscheidend ist eine Relativbewegung zwischen Schweißbrenner 2 und Werkstück 4 entlang der Schweißbahn 3. Für den Schweißprozess müssen in Abhängigkeit der jeweiligen Lage und Anordnung des Werkstücks 4 sowie der Schweißbahnrichtung, die dem Tangentialvektor t der Schweißbahn 3 entspricht, bestimmte Schweißparameter P eingestellt werden. Über diese Schweißparameter P werden der Schweißprozess und damit die Schweißnaht 6 beeinflusst. Dabei gibt es von der jeweiligen Schweißaufgabe abhängig unterschiedliche Anforderungen an die Schweißnaht 6. Beispielsweise kann der Schweißprozess über die Einstellung der Schweißparameter P für Schweißgeschwindigkeit, Einbrandtiefe oder auch eine optisch ansprechende Schweißnaht 6 optimiert werden.

Zudem besitzen Schweißprozesse eine stark lage- bzw. bewegungsabhängige Komponente. Der im Zentrum des Schweißprozesses verflüssigte Werkstoff 7 wird abhängig von Anordnung und Lage der Werkstücke 4 unterschiedlich von der Schwerkraft beeinflusst. Man vergleiche nur die beiden Extrembeispiele von Wannenposition und Überkopfposition. Das Gleiche gilt auch für die Bewegungsrichtung des Schweißbrenners 2, wie beispielsweise in der Fallposition oder Steigposition. Durch die Festlegung der Schweißparameter P, wie beispielsweise Schweißgeschwindigkeit, Anstellwinkel des Schweißbrenners, Schweißstrom, um nur einige zu nennen, werden die Kräfte auf den verflüssigten Werkstoff 7 verändert und der Schweißprozess für die aktuelle Schweißaufgabe optimiert. Aufgrund der sich zusätzlich bei beinahe jeder Schweißaufgabe ändernden Lage und Geometrie des Werkstücks 4 entlang einer vorgegebenen Schweißbahn 3 ist die Festlegung von Schweißparametern P eine üblicherweise von Spezialisten durchzuführende Tätigkeit.

Um die Festlegung der Schweißparameter P am aktuellen Werkstück 4 ohne Spezialisten vorzugsweise automatisch durchführen zu können, werden vor der Festlegung der Schweißparameter P des Schweißprozesses ideale Schweißparameter Pi ermittelt. Die idealen Schweißparameter Pi, welche die Schweißaufgabe entsprechend den Vorgaben (Schweißgeschwindigkeit, Einbrandtiefe, Nahtoberfläche, A-Maß...) erfüllen, werden von entsprechenden Spezialisten ermittelt. Die idealen Schweißparameter Pi werden bei Testschweißprozessen an mehreren Testwerkstücken 8 entlang Testschweißbahnen 9 ermittelt und gespeichert. Die Relativbewegung des Schweißbrenners 2 zum Testwerkstück 8 entlang der Testschweißbahn 9 und deren jeweilige Ausrichtung gegenüber dem Erdbeschleunigungsvektor g haben großen Einfluss auf den Testschweißprozess. Daher werden mit den idealen Schweißparametern Pi zugleich die Lage und Anordnung der Testwerkstücke 8 in Bezug auf den Erdbeschleunigungsvektor g und den Tangentialvektor t der Testschweißbahn 9, für den jeweiligen Punkt, an dem die idealen Schweißparameter Pi ermittelt wurden, gespeichert. Dies erlaubt, die Verknüpfung von tatsächlicher Werkstückgeometrie und Festlegung der Schweißparameter P für den durchzuführenden Schweißprozess durch den Spezialisten aufzubrechen. Der Schweißprozess mit denselben Schweißparametern P liefert nämlich an allen Punkten mit gleicher Lage und Anordnung der Werkstücke 4, 8 in Bezug auf den Erdbeschleunigungsvektor g und gleichem Tangentialvektor t der Schweißbahn 3, 9 vergleichbare Ergebnisse. Der Tangentialvektor t entspricht der Richtung der Testschweißbahn 9 bzw. Schweißbahn 3 im jeweiligen, aktuellen Punkt. Dabei weisen die Ergebnisse des Schweißprozesses bei gleichen Umgebungsbedingungen und vergleichbareren geometrischen Bedingungen die höchste Übereinstimmung auf.

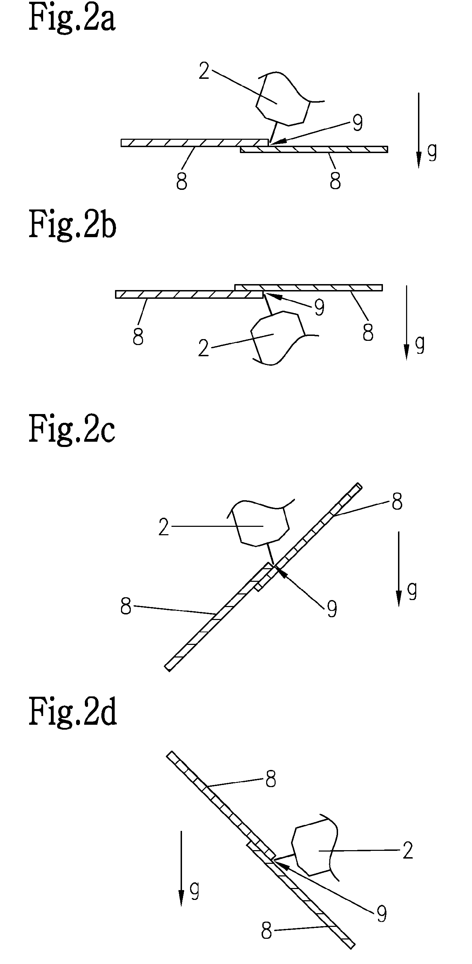

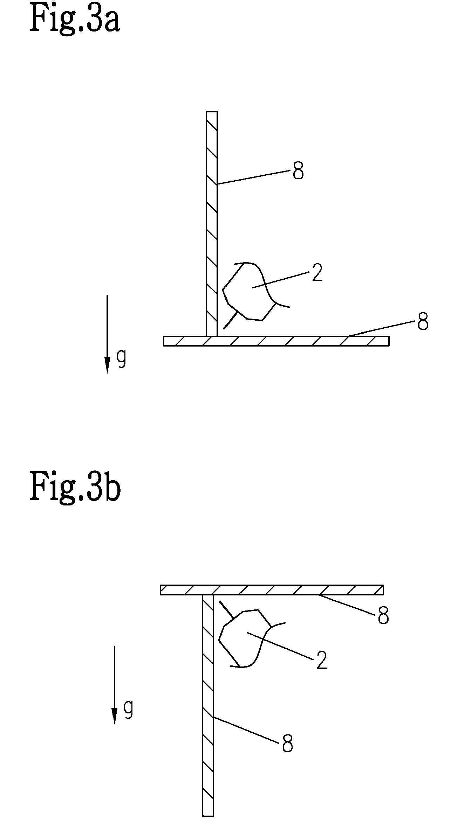

Anhand der Figuren 2a bis 2f und Figuren 3a und 3b wird nun die Ermittlung und Speicherung der idealen Schweißparameter Pi für eine bestimmte Anordnung der Testwerkstücke 8 näher erläutert. Die ebenen Testwerkstücke 8 bestehen dabei vorzugsweise aus dem gleichen Material und besitzen eine ähnliche Oberfläche wie die Werkstücke 4 der realen Schweißaufgabe. Die Testwerkstücke 8 sollten also hinsichtlich der Schweißeigenschaften den Werkstücken 4 der eigentlichen Schweißaufgabe gleich sein.

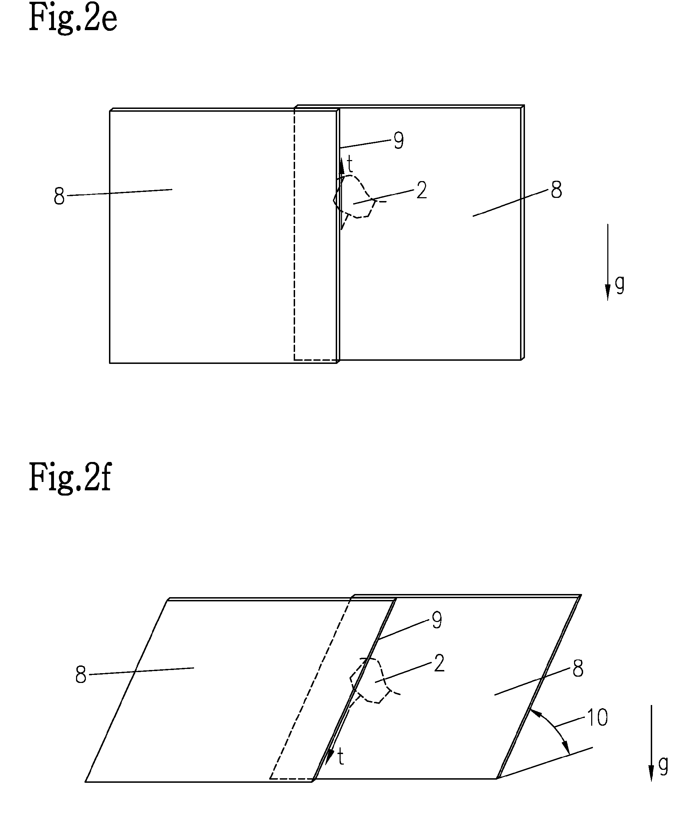

Entsprechend Fig. 2a werden beispielsweise zuerst die idealen Schweißparameter Pi einer Überlappnaht in ersten Lage, hier in Wannenposition, erfasst und gespeichert. Dazu werden von einem Spezialisten entsprechend der Schweißaufgabe die idealen Schweißparameter Pi während der Durchführung eines Testschweißprozesses ermittelt. Wird die Schweißaufgabe zufriedenstellend erfüllt und ist durch eine Änderung der eingestellten Werte keine Verbesserung hinsichtlich des Ergebnisses der Schweißaufgabe zu erwarten, werden die eingestellten Werte als ideale Schweißparameter Pi für eine Überlappnaht in Wannenposition abgespeichert. Fig. 2b zeigt die ebenen Testwerkstücke 8 in einer weiteren Lage, der Überkopfposition, Fig. 2c und Fig. 2d zeigen die Lagen der Testwerkstücke 8 mit einer 45° gekippten, horizontal angeordneten Testschweißbahn 9, für welche auch die idealen Schweißparameter Pi ermittelt und gespeichert werden. Bei den hier dargestellten geraden Testschweißbahnen 9 ist die Richtung des Tangentialvektors t gleich der Richtung der Testschweißbahn 9. Fig. 2e stellt die senkrechte Lage der Testwerkstücke 8 für Testschweißbahnen 9 zur Speicherung der idealen Schweißparameter Pi für die Fallposition bzw. die Steigposition dar. Zusätzlich werden in bestimmten Zwischenpositionen, in Fig. 2f beispielsweise für eine unter einem definierten Winkel 10 steigende bzw. fallende Testschweißbahn 9, ideale Schweißparameter Pi gespeichert. Im Ausführungsbeispiel ist ein Winkel 10 von 45° gewählt, allerdings kann hier eine beliebige Anzahl von Zwischenpositionen und Winkeln 10 gewählt werden, um eine höhere Anzahl von idealen Schweißparametern Pi und damit eine bessere Datenbasis zur Interpolation für unterschiedliche Lagen zu erhalten. Des Weiteren werden ideale Schweißparameter Pi für unterschiedliche Ausrichtungen der Testschweißbahn 9 in Bezug auf den Erdbeschleunigungsvektor g erfasst.

Für andere Anordnungen der Testwerkstücke 8, beispielsweise einer in Fig. 3a und Fig. 3b dargestellten Kehlnaht in Wannen bzw. Überkopfposition, ist analog vorzugehen.

Der Vollständigkeit wegen sei hingewiesen, dass nicht alle Schweißprozesse in allen Positionen ausgeführt werden können. Insbesondere die Ausführbarkeit des Schweißprozesses in der Überkopfposition ist material- und prozessabhängig. In diesem Fall werden die idealen Schweißparameter Pi nur für ausführbare Positionen des Schweißprozesses ermittelt und gespeichert.

Anschließend werden die Schweißparameter Pi für den durchzuführenden Schweißprozess der realen Schweißaufgabe festgelegt. Dies erfolgt für den jeweiligen Punkt auf der Schweißbahn 3 in Abhängigkeit der aktuellen Lage und Anordnung des zumindest einen Werkstücks 4 in Bezug auf den Erdbeschleunigungsvektor g und den aktuellen Tangentialvektor t entlang der Schweißbahn 3. Da, wie schon erwähnt, an allen Punkte mit gleicher Lage und Anordnung des Werkstücks 4 in Bezug auf den Erdbeschleunigungsvektor g und gleichem Tangentialvektor t der Schweißbahn 3 der Schweißprozess mit denselben Schweißparametern P annähernd gleiche Ergebnisse liefert, kann die Zuordnung nun ohne Zutun eines Spezialisten vorzugsweise automatisch durchgeführt werden. Zur Festlegung der Schweißparameter P für einen bestimmten Punkt auf der Schweißbahn 3, wird die aktuelle Lage und Anordnung der Werkstücke 4 sowie der Tangentialvektor t der Schweißbahn 3 mit der gespeicherten Lage und Anordnung der Testwerkstücke 8 und dem Tangentialvektor t der Testschweißbahn 9 verglichen. Für die genaue aktuelle Lage und Anordnung der Werkstücke 4 sowie den Tangentialvektor t der Schweißbahn 3 sind wahrscheinlich keine idealen Schweißparameter Pi festgelegt und gespeichert worden. Daher werden die Schweißparameter P durch Interpolation der, der aktuellen Lage und Anordnung sowie des aktuellen Tangentialvektors t der Schweißbahn 3 nächstliegenden idealen Schweißparameter Pi, festgelegt. Durch die Erfassung der idealen Schweißparameter Pi gemäß dem erfindungsgemäßen Verfahren kann in weiterer Folge die Festlegung der Schweißparameter P des Schweißprozesses bei verschiedenen, konkreten Werkstücken 4 erfolgen. Dabei können die Schweißparameter P beispielsweise computerunterstützt direkt während des Schweißprozesses aus den idealen Schweißparametern Pi festgelegt werden. Aber auch vor dem eigentlichen Schweißprozess können die mit dem Verfahren festgelegten Schweißparameter P für eine Simulation des Schweißprozesses genutzt werden. Ebenso ist vorstellbar, dass für Systeme mit geringerer Rechenleistung die Schweißparameter P im Vorhinein festgelegt werden.

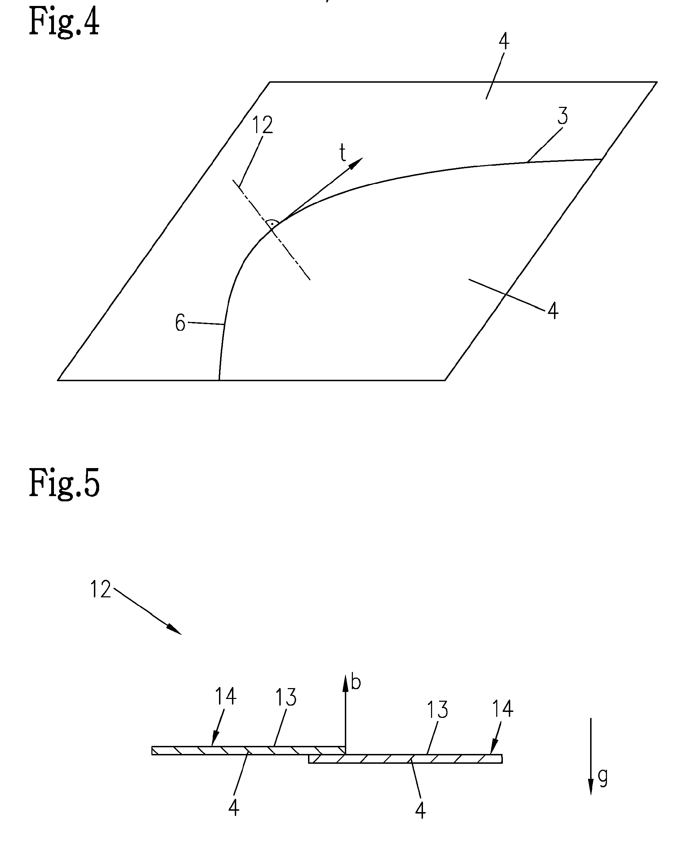

Im beispielhaften Verfahren wird die Festlegung der Schweißparameter P mit Hilfe eines Bauteilvektors b vereinfacht. Dazu wird, wie in Fig. 4 dargestellt, für Punkte entlang der Schweißbahn 3 bzw. der Testschweißbahn 9 ein Bauteilvektor b relativ zum Erdbeschleunigungsvektor g aus der Lage und der Anordnung der Werkstücke 4 bzw. Testwerkstücke 8 in Bezug auf den Erdbeschleunigungsvektor g definiert. Im dargestellten Ausführungsbeispiel wird der Bauteilvektor b ausgehend vom aktuellen Punkt auf der Schweißbahn 3 in einer Ebene 12 senkrecht auf den Tangentialvektor t der Schweißbahn 3 definiert. Diese Ebene 12, im folgenden Bauteilvektorebene 12 genannt, schneidet die Werkstücke 4, wie in Fig. 5 dargestellt. Die Definition des Bauteilvektors b erfolgt nun in der Bauteilvektorebene 12 über die Winkelsymmetrale der beiden Tangenten 13 der an die Schweißbahn 3 angrenzenden Werkstückoberflächen 14. Aus oben erwähnten Gründen, dem Einfluss der Gravitationskraft auf den verflüssigten Werkstoff 7, wird der Bauteilvektor b immer mit Bezug zum Erdbeschleunigungsvektor g bestimmt.

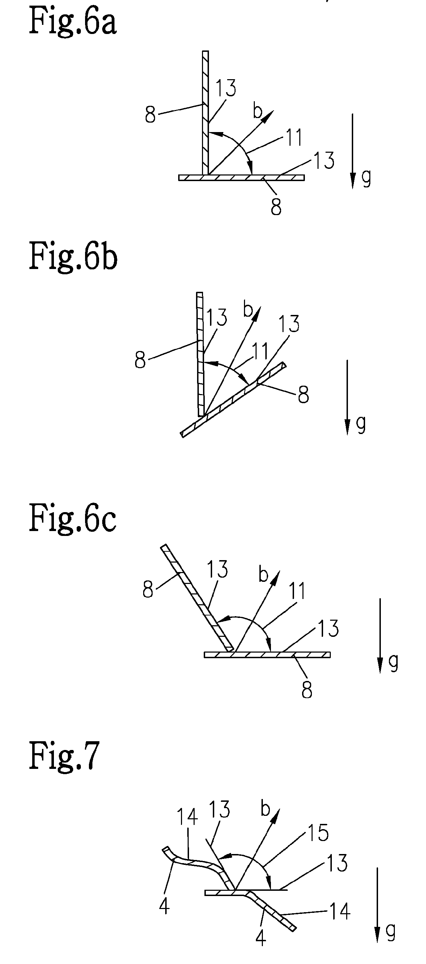

Fig 6a-6c zeigen Bauteilvektoren b für ebene Testwerkstücke 8 zur Lösung unterschiedlicher Schweißaufgaben.

Fig. 7 zeigt den Bauteilvektor b eines nicht ebenen Werkstücks 4 in Richtung der Winkelsymmetrale der Tangenten 13 der Werkstückoberflächen 14. Die Bestimmung des Bauteilvektors b am Testwerkstück 8 bzw. Werkstück 4 kann durch Sensoren, die die Werkstückoberflächen abtasten, unterstützt werden bzw. automatisiert erfolgen. Auch die Bestimmung des Bauteilvektors b beim sogenannten "Teachen" einer Schweißbahn 3 ist denkbar. Hier kann einerseits durch den Anstellwinkel des Schweißbrenners 2 der Bauteilvektor b definiert werden, oder eine Definition über zusätzliche Punkte auf den Werkstückoberflächen 14 links und rechts der Schweißbahn 3 erfolgen. Auch eine manuelle Eingabe des Bauteilvektors b zum aktuellen Punkt auf der Schweißbahn 3 kann vor dem Schweißprozess durchgeführt werden. Über den Betrag des Bauteilvektors b können zusätzliche Informationen zu Verfügung gestellt werden, wie beispielsweise die Lage des Oberblechs bei einer Überlappnaht, die Form der Naht, wie Kehlnaht, Stoßnaht und dergleichen. Ist nun der Bauteilvektor b in einem Punkt der Schweißbahn 3 durch die Lage und Anordnung der Werkstücke 4 bestimmt, wird dieser zur Festlegung der Schweißparameter P mit den Bauteilvektoren b idealer Schweißparameter Pi verglichen. Mit einer anschließenden Interpolation der nächstliegenden idealen Schweißparameter Pi werden die Schweißparameter P für den aktuellen Bauteilvektor b bzw. für die aktuelle Position festgelegt. Bei Verwendung eines Bauteilvektors b ist anstelle des aufwendigen Vergleichs von Lage und Anordnung der Werkstücke 4, 8 nur mehr ein Vergleich des Bauteilvektors b notwendig, wodurch eine computerunterstützte Implementierung des Verfahrens vereinfacht wird.

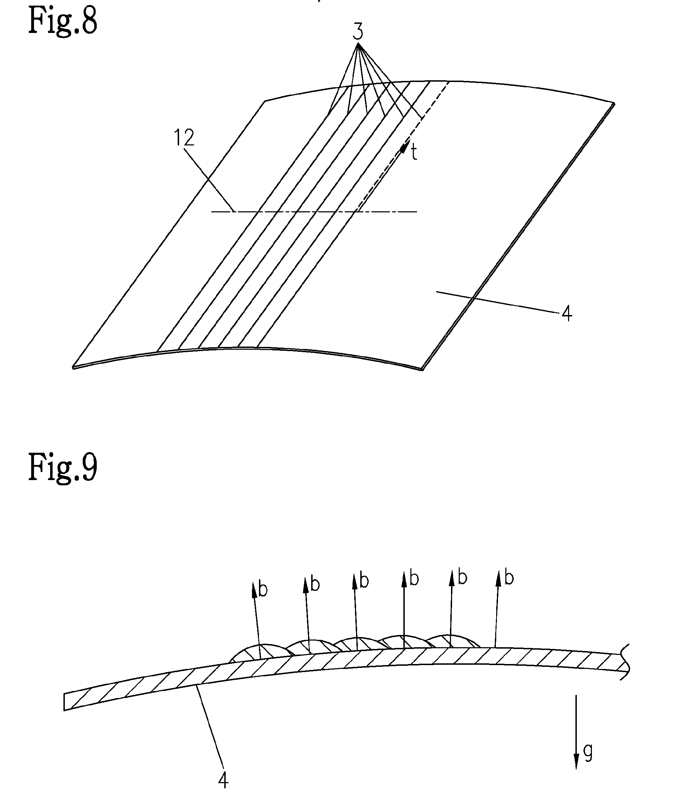

Fig. 8 zeigt die Anwendung des erfindungsgemäßen Verfahrens beim Auftragschweißen an einem gebogenen Werkstück 4. Die im Beispiel gezeigten parallelen Schweißbahnen 3 werden von der Bauteilvektorebene 12 im rechten Winkel geschnitten. Der zugehörige Schnitt ist in Fig. 9 dargestellt, aus der ersichtlich ist, dass der Bauteilvektor b beim Auftragschweißen normal von der Werkstückoberfläche gerichtet ist und zugleich senkrecht auf den Tangentialvektor t der Schweißbahn 3 steht. Das Verfahren kann ebenso für die hier nicht näher dargestellte generative Fertigung von Werkstücken genutzt werden.

Bei den festzulegenden Schweißparameter P können unter anderem der Schweißstrom, die Fördergeschwindigkeit eines Schweißdrahts, die Anstellwinkel des Schweißbrenners zu den Werkstücken und die Schweißgeschwindigkeit bestimmt werden. Auch der verwendete Schweißprozesses, wie Standard-, Puls- oder CMT-Schweißprozess, kann als Schweißparameter hinterlegt sein. So kann beispielsweise für die Überkopfposition ein anderer Schweißprozess verwendet werden, um die Schweißaufgabe optimal zu lösen. Weiters ist vorstellbar eine Relativposition des TCPs zur Schweißbahn in den Schweißparametern zu definieren. Dies erlaubt bei einer Überlappnaht den Brenner in Richtung Oberblech zu verschieben, um die Schweißaufgabe mit erhöhter Materialaufschmelzung durchzuführen.

Um die Ermittlung der idealen Schweißparameter Pi zu vereinfachen, werden diese mit Testschweißprozessen entlang Testschweißbahnen 9 mit konstantem Tangentialvektor t und konstantem Bauteilvektor b festgelegt und gespeichert. Entlang der Testschweißbahn 9 können die eingestellten Werte variiert werden und anschließend die Ergebnisse des Testschweißprozesses beurteilt werden. Die Beurteilung kann dabei optisch, beispielsweise durch Schliffbilder durchgeführt werden. Eine Bestimmung von Bauteilvektor b und Tangentialvektor t im Punkt bzw. Bereich mit den bevorzugten Ergebnissen des Testschweißprozesses ist aufgrund gleichbleibender Bauteilvektoren b und Tangentialvektoren t über die gesamte Testschweißbahn 9 nicht erforderlich.

Wie schon in Fig. 2 dargestellt, werden die idealen Schweißparameter Pi mit Testschweißprozessen an Testwerkstücken 8 mit konstanter Krümmung entlang der Testschweißbahnen 9 ermittelt und gespeichert. Die im Beispiel gezeigten ebenen Testwerkstücke 8 mit gerader Testschweißbahn 9 ergeben einen konstante Tangentialvektor t und konstanten Bauteilvektor b. Dies erleichtert die Ermittlung der idealen Schweißparameter Pi.

Insbesondere bei Testschweißprozessen entlang Testschweißbahnen 9 zwischen 10 cm und 150 cm Länge ist in deren Mitte der Einfluss von Start und Ende des Schweißprozesses vernachlässigbar. Zudem können bei konstanten idealen Schweißparametern Pi über die gesamte Testschweißbahn 9 der vorgeschlagenen Länge die Ergebnisse auch mechanisch, beispielsweise durch Belastungsversuche, beurteilt werden. Derart gespeicherte ideale Schweißparameter Pi erlauben eine hohe Reproduzierbarkeit der Ergebnisse des Testschweißprozesses. Vorteilhafterweise werden auf den Testwerkstücken 8 viele Testschweißprozesse durchgeführt, um die Werte der idealen Schweißparameter Pi zu bestimmen.

Vorzugsweise werden die idealen Schweißparameter Pi mit Testschweißprozessen mit verschiedenen Schweißdrähten mit verschiedenen Durchmessern und verschiedenen Materialien ermittelt und gespeichert. Dabei entsteht je verschiedenen Durchmessern bzw. Material ein neuer Datensatz an idealen Schweißparametern Pi. Bei der Festlegung der Schweißparameter P des durchzuführenden Schweißprozesses werden dann der Durchmesser und das Material des verwendeten Schweißdrahtes eingegeben und die Schweißparameter P für den durchzuführenden Schweißprozess in Abhängigkeit der eingegebenen Durchmesser und Materialien des Schweißdrahtes festgelegt.

Ideale Schweißparameter Pi für den Beginn des Schweißprozesses werden als Schweißstartparameter Pi_S gespeichert. Dies verbessert das Verfahren, da sich zu Beginn des Schweißprozesses Prozessparameter, wie Temperatur oder auch Menge des verflüssigten Werkstoffs 7, stark verändern. Ebenso werden Schweißendeparameter Pi_E für das Ende des Schweißprozesses anhand von Testschweißprozessen ermittelt und gespeichert. Die Bestimmung der Schweißstartparameter Pi_S und Schweißendeparameter Pi_E erfolgt selbstverständlich auch für unterschiedliche Lagen und Anordnungen sowie Tangentialvektoren t der Testschweißbahn 9. Dabei kann Lage und Anordnung mit Hilfe eines Bauteilvektors b erfasst werden. Mit den Schweißstartparameter Pi_S, Schweißendeparameter Pi_E und idealen Schweißparametern Pi für den Verlauf einer Testschweißbahn 9 werden die Schweißparameter P für den durchzuführenden Schweißprozess durch Interpolation festgelegt. Zur Veranschaulichung dieses Vorgangs können Schweißstartparameter Pi_S, Schweißendeparameter Pi_E und idealen Schweißparameter Pi jeweils als ein mehrdimensionales Feld, wobei bei bestimmten Tangentialvektor t der Schweißbahn 3, Testschweißbahn 9 und Bauteilvektor b die idealen Schweißparameter Pi gespeichert sind, betrachtet werden. Abhängig von aktuellen Position, der aktuellen Lage und Anordnung der Werkstücke bzw. Bauteilvektor werden nun für den Beginn des Schweißprozesses aus dem Feld der Schweißstartparameter Pi_S durch Interpolation die Schweißparameter P für den Start des durchzuführenden Schweißprozesses festgelegt. Für den nächsten Punkt auf der Schweißbahn 3 werden Schweißparameter P sowohl im Feld der Schweißstartparameter Pi_S als auch im Feld der idealen Schweißparameter Pi durch Interpolation gefunden. Diese Schweißparameter P aus den zwei verschiedenen Feldern werden nun zeit- oder wegabhängig gewichtet interpoliert, um einen kontinuierlichen Übergang von den Schweißstartparametern Pi_S auf die idealen Schweißparameter Pi zu schaffen. Analog wird dies auch für das Ende des Schweißprozesses durchgeführt. Dabei ist zu beachten, dass Schweißstartparameter Pi_S bzw. Schweißendeparameter Pi_E die Durchführung des Start- und Endvorgangs definieren und somit einen Ablauf darstellen, der auch Zeitwerte beinhalten und Bewegungen an einer Position, beispielsweise die Änderung des Anstellwinkels des Schweißbrenners, erfordern kann. Bei so definierten Schweißstartparameter Pi_S bzw. Schweißendeparameter Pi_E erfolgt die gewichtete Interpolation mit den idealen Schweißparametern Pi auf der Schweißbahn mit den letzten Werten der Schweißstartparameter Pi_S bzw. mit den ersten Werten der Schweißendeparameter Pi_E. Mit dem derart ausgeführten Verfahren werden über die gesamte Schweißbahn 3, einschließlich Beginn und Ende, durchgehend vorteilhafte Schweißparameter P für den Schweißprozess eingestellt. Besonders vorteilhaft ist dies bei der Ausbildung von sogenannten Steppnähten, bei denen die Schweißnaht 6 regelmäßig durch nahtlose Bereiche unterbrochen ist.

Die idealen Schweißparameter Pi können mit Testschweißprozessen unter mehreren bestimmten Öffnungswinkeln 11 zwischen den Testwerkstücken 8 ermittelt und gespeichert werden. Die Schweißparameter P für den durchzuführenden Schweißprozess werden dann in Abhängigkeit des aktuellen Öffnungswinkels 15 zwischen den Werkstücken 4 durch Interpolation der Werte der idealen Schweißparameter Pi bei den bestimmten Öffnungswinkeln 11 zwischen den Testwerkstücken 8 festgelegt. Da der Öffnungswinkel 15 zwischen den Werkstücken 4 den Schweißprozess beeinflusst, kann so ein verbessertes Ergebnis der aktuellen Schweißaufgabe erzielt werden.

Die idealen Schweißparameter Pi können auch mit Testschweißprozessen unter mehreren bestimmten Temperaturen der Testwerkstücke 8 ermittelt und gespeichert werden. Anschließend werden die Schweißparameter P für den durchzuführenden Schweißprozess in Abhängigkeit der ermittelten aktuellen Temperatur der Werkstücke 4 durch Interpolation der Werte der idealen Schweißparameter Pi bei den bestimmten Temperaturen der Testwerkstücke 8 festgelegt. Zur Veranschaulichung kann die Temperatur als weitere Dimension des Feldes von idealen Schweißparametern Pi betrachtet werden. Die Anpassungen der Schweißparameter P an die Temperatur gewährleistet die vorteilhafte Ausführung des Schweißprozesses.

Auch die Kühlungssituation kann eine zusätzliche Dimension des Feldes von idealen Schweißparametern darstellen, da die Kühlungssituation den Temperaturverlauf des Schweißprozesses beeinflusst. Die Berücksichtigung der Kühlungssituation erlaubt daher eine vorteilhafte Festlegung der Schweißparameter P. Dazu muss die Kühlungssituation mit den idealen Schweißparametern Pi gespeichert und vor Festlegung der Schweißparameter P des durchzuführenden Schweißprozesses eingegeben werden. Dazu kann beispielsweise bei Testschweißprozessen das Kühlverhalten der Schweißnaht gemessen werden oder ein Korrekturfaktor für die aktuelle Kühlungssituation eingegeben werden.

Die idealen Schweißparameter Pi können auch mit Testschweißprozessen aus verschiedenen Materialien ermittelt und gespeichert werden. Wiederum müssen zur Festlegung der Schweißparameter P des durchzuführenden Schweißprozesses die Materialien der Werkstücke 4 eingegeben werden, worauf die Schweißparameter P für den durchzuführenden Schweißprozess in Abhängigkeit der eingegebenen Materialien der Werkstücke 4 festgelegt werden. Verschiedene Materiale meint hier auch Materialen aus demselben Werkstoff mit unterschiedlichen Wandstärken

Vorteilhaft für die Festlegung der Schweißparameter P ist auch eine Berücksichtigung der geometrischen Bedingungen. Damit sind insbesondere unterschiedliche Spaltbreite, Werkstückversatz, Winkel zwischen den Werkstücken, Schwankung der sogenannten Anarbeitung und dergleichen gemeint. Zur Berücksichtigung der geometrischen Bedingungen werden die idealen Schweißparameter Pi mit Testschweißprozessen unter mehreren bestimmten geometrischen Bedingungen für die Testwerkstücke 8 ermittelt und gespeichert. Tritt bei der Festlegung der Schweißparameter P für den durchzuführenden Schweißprozess bei der aktuellen geometrischen Bedingungen eine Abweichung auf, werden die Schweißparameter P an die geänderten geometrischen Bedingungen, gegebenenfalls mittels einer Interpolation, angepasst. Der Einsatz dieses Verfahren ist bei messtechnischer Erfassung der geometrischen Bedingungen am aktuellen Werkstück 4 besonders effizient. Wird beispielsweise die Spaltbreite zwischen den Werkstücken 4 während der Durchführung des Schweißprozesses erfasst und überwacht, können bei einer erkannten Änderung der Spaltbreite automatisch ideale Schweißparameter Pi der neuen Spaltbreite zur Festlegung der Schweißparameter P herangezogen werden. Dies erlaubt, den Anteil an mangelhaften gefertigten Werkstücken 4 zu reduzieren und damit die Effizienz der Fertigung zu steigern. Für die Berücksichtigung von geometrische Abweichungen bzw. Störungen müssen die Schweißparameter P üblicherweise in Echtzeit während des Schweißprozesses festgelegt werden.

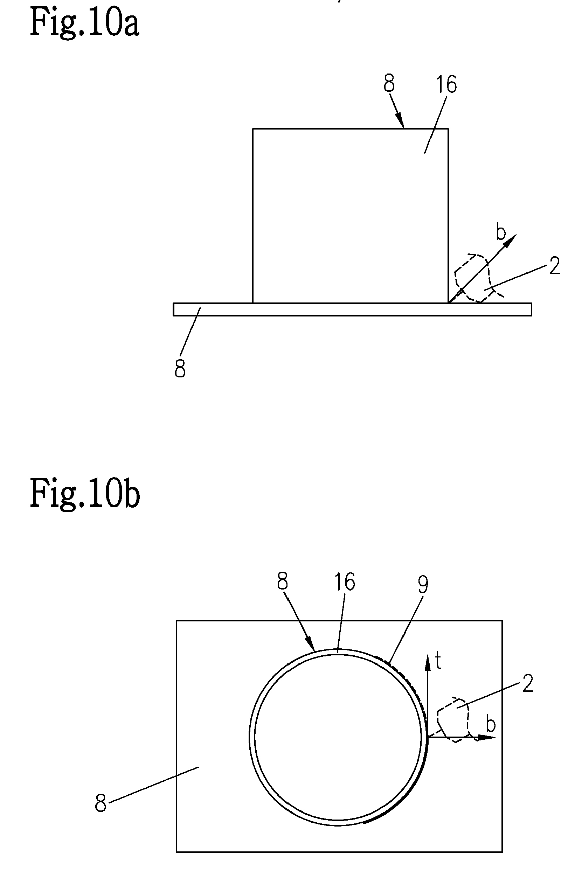

In einer Ausgestaltung des Verfahrens wird der Krümmungsradius an der jeweiligen Position entlang der Schweißbahn 3 als weiterer Parameter zur Festlegung der Schweißparameter P herangezogen. Neben dem Tangentialvektor t der Schweißbahn 3 hat auch der Krümmungsradius der Schweißbahn 3 Einfluss auf die idealen Schweißparameter Pi. Diese Einflüsse erfolgen beispielsweise über die Temperatur, da bei kleinen Krümmungsradien der Schweißprozess in einem lokal begrenzten Bereich stattfindet. Eine erhöhte Erwärmung des Werkstücks 4 ist die Folge. Eine Berücksichtigung des Krümmungsradius bei der Speicherung der idealen Schweißparameter Pi sowie der Festlegung der Schweißparameter P kann so zu Vorteilen bei der Durchführung des Schweißprozesses führen. Die idealen Schweißparameter Pi können hierbei vorteilhaft ermittelt werden, indem die Testwerkstücke 8 mit einer Testschweißbahn 9 konstanter Krümmung bei stillstehendem Schweißbrenner 2 bewegt werden. Dadurch bleiben sowohl Tangentialvektor t der Testschweißbahn 9 als auch Bauteilvektor b konstant, was eine eindeutige Zuordnung der idealen Schweißparameter Pi zu Tangentialvektor t, Bauteilvektor b und Krümmung vereinfacht. Fig. 10 a und b zeigt hierzu ein Beispiel einer Anordnung von Testwerkstücken 8, die eine Testschweißbahn 9 mit konstanter Krümmung aufweist. Im Detail ist in Fig. 10 a eine Vorderansicht und in Fig. 10b ein Draufsicht auf ein Testwerkstück 8, nämlich ein Rohr 16, welches auf einem ebenen Testwerkstück 8 angeordnet ist, gezeigt. Bei dieser Anordnung kann die Forderung nach einer konstanten Krümmung, bei gleichzeitig konstantem Bauteilvektor b und Tangentialvektor t, mittels einer reinen Drehung der Testwerkstücke 8 einfach und kostengünstig mit einem nicht näher dargestellten Drehtisch realisiert werden.

Auch die Geometrie der Werkstücke 4 in der Umgebung der jeweiligen Position entlang der Schweißbahn 3 kann bei der Festlegung der Schweißparameter P berücksichtigt werden. Die Geometrie der Werkstücke 4 beeinflusst nämlich die Kühlung und Oberflächenspannung des verflüssigten Werkstoffs 7. Eine Berücksichtigung der Geometrie der Werkstücke 4 in der Umgebung der jeweiligen Position bewirkt so insgesamt eine verbesserte Festlegung der Schweißparameter P.

Die Festlegung der Schweißparameter P für Punkte auf der Schweißbahn 3 kann für den durchzuführenden Schweißprozess in regelmäßigen Zeitintervallen oder regelmäßigen Distanzen der Schweißbahn 3 durchgeführt werden. Bei Zeitintervallen kleiner 100 ms entsteht ein beinahe kontinuierlicher Übergang zwischen aufeinanderfolgenden Schweißparametern P. Dennoch ist auch der Einsatz von größeren Intervallen denkbar, insbesondere wenn die Rechenleistung für die Festlegung von Schweißparametern P mit kleinerem Intervall nicht ausreichend ist.

## Patentansprüche

1. Verfahren zur Festlegung von Schweißparametern (P) für einen Schweißprozess, bei dem ein Schweißbrenner (2) entlang einer vorgegebenen Schweißbahn (3) über das zumindest eine zu bearbeitende Werkstück (4) geführt wird und in Abhängigkeit der jeweiligen Position auf der Schweißbahn (3) bestimmte Schweißparameter (P) zur Bearbeitung des zumindest einen Werkstücks (4) eingestellt werden, **dadurch gekennzeichnet, dass** vor der Festlegung der Schweißparameter (P) des Schweißprozesses ideale Schweißparameter (Pi) mit Testschweißprozessen an mehreren Testwerkstücken (8) entlang Testschweißbahnen (9) unter jeweils einer bestimmten Lage und Anordnung der Testwerkstücke (8) in Bezug auf den Erdbeschleunigungsvektor (g) und einen bestimmten Tangentialvektor (t) der Testschweißbahn (9) ermittelt und gespeichert werden, und die Schweißparameter (P) an der jeweiligen Position auf der Schweißbahn (3) für den durchzuführenden Schweißprozess in Abhängigkeit der aktuellen Lage und Anordnung des zumindest einen Werkstücks (4) in Bezug auf den Erdbeschleunigungsvektor (g) und den aktuellen Tangentialvektor (t) der Schweißbahn (3) durch Interpolation der Werte der gespeicherten idealen Schweißparameter (Pi) für die bestimmten Lagen und Anordnungen der Testwerkstücke (8) in Bezug auf den Erdbeschleunigungsvektor (g) und den bestimmten Tangentialvektoren (t) der Testschweißbahnen (9) festgelegt werden.

2. Verfahren nach Anspruch 1, **dadurch gekennzeichnet, dass** zumindest für einzelne Punkte entlang der Schweißbahn (3) des zumindest einen zu bearbeitenden Werkstücks (4) und entlang der Testschweißbahn (9) der Testwerkstücke (8) ein Bauteilvektor (b) relativ zum Erdbeschleunigungsvektor (g) aus der Lage und der Anordnung der Werkstücke (4) bzw. Testwerkstücke (8) in Bezug auf den Erdbeschleunigungsvektor (g) definiert wird.

3. Verfahren nach Anspruch 1 oder 2, **dadurch gekennzeichnet, dass** als Schweißparameter (P) zumindest der Schweißstrom, die Fördergeschwindigkeit eines Schweißdrahts, die Anstellwinkel des Schweißbrenners zu den Werkstücken (4) und die Schweißgeschwindigkeit ausgewählt werden.

4. Verfahren nach Anspruch 2 oder 3, **dadurch gekennzeichnet, dass** die idealen Schweißparameter (Pi) mit Testschweißprozessen entlang Testschweißbahnen (9) mit konstantem Tangentialvektor (t) und konstantem Bauteilvektor (b) ermittelt und gespeichert werden.

5. Verfahren nach einem der Ansprüche 1 bis 4, **dadurch gekennzeichnet, dass** die idealen Schweißparameter (Pi) mit Testschweißprozessen an Testwerkstücken (8) mit konstanter Krümmung entlang der Testschweißbahnen (9) ermittelt und gespeichert werden.

6. Verfahren nach einem der Ansprüche 1 bis 5, **dadurch gekennzeichnet, dass** die idealen Schweißparameter (Pi) mit Testschweißprozessen entlang Testschweißbahnen (9) zwischen 10 cm und 100 cm Länge ermittelt und gespeichert werden.

7. Verfahren nach einem der Ansprüche 1 bis 6, **dadurch gekennzeichnet, dass** die idealen Schweißparameter (Pi) mit Testschweißprozessen mit verschiedenen Schweißdrähten mit verschiedenen Durchmessern und verschiedenen Materialien ermittelt und gespeichert werden, zur Festlegung der Schweißparameter (P) des Schweißprozesses der Durchmesser und das Material des verwendeten Schweißdrahtes eingegeben wird, und die Schweißparameter (P) für den durchzuführenden Schweißprozess in Abhängigkeit der eingegebenen Durchmesser und Materialien des Schweißdrahtes festgelegt werden.

8. Verfahren nach einem der Ansprüche 1 bis 7, **dadurch gekennzeichnet, dass** ideale Schweißparameter (Pi) für den Beginn als Schweißstartparameter (Pi_S) und bzw. oder für das Ende des Testschweißprozesses als Schweißendeparameter (Pi_E) an Testwerkstücken (8) ermittelt und gespeichert werden und dass die Schweißparameter (P) für den durchzuführenden Schweißprozess mit Schweißstartparametern (Pi_S) beginnen und bzw. oder mit Schweißendeparametern (Pi_E) enden, welche entsprechend der aktuellen Lage und Anordnung des zumindest einen Werkstücks (4) in Bezug auf den Erdbeschleunigungsvektor (g) und den aktuellen Tangentialvektor (t) an der jeweiligen Position durch Interpolation der Werte der gespeicherten Schweißstartparameter (Pi_S) bzw. Schweißendeparameter (Pi_E) für die bestimmten Lagen und Anordnungen der Testwerkstücke (8) in Bezug auf den Erdbeschleunigungsvektor (g) und den bestimmten Tangentialvektoren (t) festgelegt werden.

9. Verfahren nach Anspruch 8, **dadurch gekennzeichnet**, die Schweißparameter (P) zu Beginn des Schweißprozesses zwischen den Schweißstartparameter (Pi_S) und den idealen Schweißparametern (Pi) bzw. am Ende des Schweißprozesses zwischen den idealen Schweißparametern (Pi) und den Schweißendeparameter (Pi_E) gewichtet mit der Distanz auf der Schweißbahn (3) oder der Zeit interpoliert werden.

10. Verfahren nach einem der Ansprüche 1 bis 9, **dadurch gekennzeichnet, dass** die idealen Schweißparameter (Pi) mit Testschweißprozessen unter mehreren bestimmten Öffnungswinkeln (11) zwischen den Testwerkstücken (8) ermittelt und gespeichert werden, und die Schweißparameter (P) für den durchzuführenden Schweißprozess in Abhängigkeit des aktuellen Öffnungswinkels (15) zwischen den Werkstücken (4) durch Interpolation der Werte der idealen Schweißparameter (Pi) bei den bestimmten Öffnungswinkeln (11) zwischen den Testwerkstücken (8) festgelegt werden.

11. Verfahren nach einem der Ansprüche 1 bis 10, **dadurch gekennzeichnet, dass** die idealen Schweißparameter (Pi) mit Testschweißprozessen unter mehreren bestimmten Temperaturen der Testwerkstücke (8) ermittelt und gespeichert werden, und die Schweißparameter (P) für den durchzuführenden Schweißprozess in Abhängigkeit der ermittelten aktuellen Temperatur des zumindest einen Werkstücks (4) durch Interpolation der Werte der idealen Schweißparameter (Pi) bei den bestimmten Temperaturen der Testwerkstücke (8) festgelegt werden.

12. Verfahren nach einem der Ansprüche 1 bis 11, **dadurch gekennzeichnet, dass** die idealen Schweißparameter (Pi) mit Testschweißprozessen unter mehreren bestimmten Kühlungssituationen der Testwerkstücke (8) ermittelt und gespeichert werden, zur Festlegung der Schweißparameter (P) des Schweißprozesses die Kühlungssituation des zumindest einen Werkstücks (4) eingegeben wird, und die Schweißparameter (P) für den durchzuführenden Schweißprozess in Abhängigkeit der eingegebenen Kühlungssituation des Werkstücks (4) festgelegt werden.

13. Verfahren nach einem der Ansprüche 1 bis 12, **dadurch gekennzeichnet, dass** die idealen Schweißparameter (Pi) mit Testschweißprozessen an Testwerkstücken (8) aus verschiedenen Materialien ermittelt und gespeichert werden, zur Festlegung der Schweißparameter (P) des Schweißprozesses das Material des zumindest einen Werkstücks (4) eingegeben wird, und die Schweißparameter (P) für den durchzuführenden Schweißprozess in Abhängigkeit des eingegebenen Materials des Werkstücks (4) festgelegt werden.

14. Verfahren nach einem der Ansprüche 1 bis 13, **dadurch gekennzeichnet, dass** die idealen Schweißparameter (Pi) mit Testschweißprozessen unter mehreren bestimmten geometrischen Bedingungen für die Testwerkstücke (8) ermittelt und gespeichert werden, und dass die Schweißparameter (P) für den durchzuführenden Schweißprozess in Abhängigkeit der ermittelten aktuellen geometrischen Bedingungen für die Werkstücke (4) durch Interpolation der Werte der idealen Schweißparameter (Pi) bei den bestimmten geometrischen Bedingungen für die Testwerkstücke (8) festgelegt werden.

15. Verfahren nach einem der Ansprüche 1 bis 14, **dadurch gekennzeichnet, dass** die Schweißparameter (P) für den durchzuführenden Schweißprozess an dem zumindest einen Werkstück (4) unter Berücksichtigung des jeweiligen Krümmungsradius an der jeweiligen Position entlang der Schweißbahn (3) festgelegt werden.

16. Verfahren nach einem der Ansprüche 1 bis 15, **dadurch gekennzeichnet, dass** die Schweißparameter (P) für den durchzuführenden Schweißprozess an dem zumindest einen Werkstück (4) unter Berücksichtigung der Geometrie des Werkstücks (4) in der Umgebung der jeweiligen Position entlang der Schweißbahn (3) festgelegt werden.

17. Verfahren nach einem der Ansprüche 1 bis 16, **dadurch gekennzeichnet, dass** die Schweißparameter (P) für den durchzuführenden Schweißprozess in regelmäßigen Zeitintervallen oder regelmäßigen Distanzen der Schweißbahn (3) festgelegt werden.
